Europäisches Patentamt

European Patent Office

Office européen des brevets

(11) Veröffentlichungsnummer: **0 291 964**

**A1**

## (12) EUROPÄISCHE PATENTANMELDUNG

(21) Anmeldenummer: 88107976.8

(51) Int. Cl.4: **F16H 5/28**

(22) Anmeldetag: 18.05.88

(30) Priorität: 20.05.87 HU 224887

(43) Veröffentlichungstag der Anmeldung:
23.11.88 Patentblatt 88/47

(84) Benannte Vertragsstaaten:
AT DE FR GB

(71) Anmelder: **Csepel Autogyár**
**Pf. 38**
**H-2311 Szigetszentmiklos(HU)**

(72) Erfinder: **Simonyi, Sándor, Dr.Dipl.-Ing.**
**Petöfi u. 59**
**H-3102 Salgótarján Baglyasalja(HU)**
Erfinder: **Töröcsik, László, Dipl.-Ing**
**Kakukk u. 10/b**
**H-1126, Budapest(HU)**
Erfinder: **Toth, István, Ing.**
**Kistarján u. 8**
**H-3100 Salgotarján(HU)**
Erfinder: **Váloczi, György, Ing.**
**Budapesti u. 40**
**H-3104 Salgotarján(HU)**

(74) Vertreter: **Patentanwälte Viering & Jentschura**
**Steinsdorfstrasse 6**
**D-8000 München 22(DE)**

(54) **Elektropneumatische Fernschaltvorrichtung, insbesondere zum Schalten eines synchronisierten mechanischen Wechselgetriebes von Kraftfahrzeugen.**

(57) Elektropneumatische Fernschaltvorrichtung, insbesondere zum Schalten eines synchronisierten mechanischen Wechselgetriebes von Kraftfahrzeugen, mit von elektropneumatischen Ventilen gesteuerten pneumatischen Arbeitszylindern, die einen das Schalten durchführenden Dreistellungs-Arbeitszylinder und einen das Wählen durchführenden Arbeitszylinder mit der Anzahl der Schaltstraßen entsprechender Stellungsanzahl enthalten, dadurch gekennzeichnet, daß der das Schalten durchführende Dreistellungs-Arbeitszylinder von dem elektropneumatischen Ventilsystem derart gesteuert ist, daß er während seiner Bewegung in seine beiden äußeren Stellungen eine kleinere bzw. eine größere Kraft ausüben kann, daß der manuell betätigte Fernschaltarm in der Wählrichtung mit Signalgebern in der Anzahl der Schaltstraßen und in den Schaltrichtungen mit mindestens je einem der Schaltwillen anzeigenden Signalgeber und je einem das Schalten auslösenden Signalgeber versehen ist, wobei von den den Schaltwillen anzeigenden Signalgebern die derjenigen Bewegung des Dreistellungs-Arbeitszylinders, bei welcher dieser die kleinere Kraft ausübt, zugeordneten elektropneumatischen Ventile, und von den das Schalten auslösenden Signalgebern die derjenigen Bewegung des Dreistellungs-Arbeitszylinders, bei welcher dieser die größere Kraft ausübt, zugeordneten elektropneumatischen Ventile gesteuert werden, daß wenigstens der Dreistellungs-Arbeitszylinder in dessen Endstellungen ansprechende Signalgeber aufweist, und daß eine den Fernschaltarm bremsende bzw. haltende, elektromagnetisch betätigte Vorrichtung vorgesehen ist, die von den den Schaltwillen anzeigenden Signalgebern einschaltbar ist, von den das Schalten auslösenden Signalgebern ausschaltbar ist und von den den Endstellungen des Dreistellungs-Arbeitszylinders zugeordneten Signalgebern wieder einschaltbar ist.

**Elektropneumatische Fernschaltvorrichtung, insbesondere zum Schalten eines synchronisierten mechanischen Wechselgetriebes von Kraftfahrzeugen**

Die Erfindung bezieht sich auf eine elektropneumatische Fernschaltvorrichtung, die insbesondere zum Schalten der Gangstufen eines synchronisierten mechanischen Wechselgetriebes von Kraftfahrzeugen geeignet ist und bei der das Schalten von pneumatischen Arbeitszylindern durchgeführt wird. Die Bewegung in Wählrichtung wird über einen pneumatischen Arbeitszylinder, der über eine der Anzahl der "Schaltstraßen" entsprechende Stellungsanzahl verfügt, durchgeführt, wohingegen die Bewegung in Schaltrichtung über einen über drei Stellungen verfügenden pneumatischen Arbeitszylinder durchgeführt wird. Die Bewegung der pneumatischen Arbeitszylinder wird über elektropneumatische Ventile gesteuert.

Das Wesen der Erfindung ist wie folgt.

Der das Schalten durchführende, über drei Stellungen verfügende Arbeitszylinder wird von dem Ventilsystem in der Weise gesteuert, daß dieser während seiner Bewegung in die beiden äußeren Stellungen eine geringere und eine größere Kraft ausüben kann. Diese kann beispielsweise mittels eines Druckreglers oder durch eine entsprechende Ausbildung erreicht werden.

Der vom Fahrzeugfahrer betätigte Fernschaltarm ist in der Wählrichtung mit Signalgebern in der Anzahl der "Schaltstraßen" entsprechender Anzahl und Position versehen, wohingegen er in den Schaltrichtungen mit mindestens je einem den Willen des Schaltens anzeigenden Signalgeber und je einem das Schalten zustandebringenden Signalgeber versehen ist.

Die Signalgeber des Fernschaltarms in Wählrichtung stehen mit den das Wählen steuernden elektropneumatischen Ventilen in Steuerungsverbindung. Von den in Schaltrichtung angeordneten Signalgebern steuern die den Schaltwillen anzeigenden Signalgeber die mit dem über drei Stellungen verfügenden Arbeitszylinder eine geringere Kraft zustandebringenden elektropneumatischen Ventile und der das Schalten zustandebringende Signalgeber steuert die die größere Kraft zustandebringenden elektropneumatischen Ventile.

Für die Arbeitszylinder ist in den beiden Endstellungen mindestens des über drei Stellungen vefügenden Arbeitszylinders je ein Signalgeber angeordnet.

Der Fernschalter verfügt über eine den Arm bremsende und haltende Vorrichtung, die von einem Elektromagneten betätigt wird. Diese den Arm bremsende und haltende Vorrichtung ist mit den Signalgebern derart in Betätigungsverbindung, daß sie von den den Willen des Schaltens anzeigenden Signalgebern eingeschaltet wird, von den das Schalten zustandebringenden Signalgebern ausgeschaltet wird und von den in der Endstellung des über drei Stellungen verfügenden Arbeitszylinders angeordneten Signalgebern wieder eingeschaltet wird.

Die Kraft der bremsenden und haltenden Vorrichtung kann derart eingestellt werden, daß diese nur bremst, oder auch derart, daß diese nur hält. Im letzteren Fall soll zwischen dem Arm und der Vorrichtung je eine eine kurze Bewegung zulassende Feder zwischengeschaltet werden, und zwar beiden Schaltrichtungen entsprechend.

Auch der das Wählen durchführende Arbeitszylinder kann in jeder Stellung mit Signalgebern versehen werden, mit welchen ein dem Fahrzeugfahrer die Stellung des Arbeitszylinders anzeigendes Signal oder ein zum Kontrollieren der mit dem Fernschalter identischen Stellung geeignetes Signal erzeugt werden kann.

## Ansprüche

Elektropneumatische Fernschaltvorrichtung, insbesondere zum Schalten eines synchronisierten mechanischen Wechselgetriebes eines Kraftfahrzeugs, mit von elektropneumatischen Ventilen gesteuerten pneumatischen Arbeitszylindern, die einen das Schalten durchführenden Dreistellungs-Arbeitszylinder und einen das Wählen durchführenden Arbeitszylinder mit der Anzahl der Schaltstraßen entsprechender Stellungsanzahl enthalten, dadurch gekennzeichnet, daß der das Schalten durchführende Dreistellungs-Arbeitszylinder von dem elektropneumatischen Ventilsystem derart gesteuert ist, daß er während seiner Bewegung in seine beiden äußeren Stellungen eine kleinere bzw. eine größere Kraft ausüben kann, daß der manuell betätigte Fernschaltarm in der Wählrichtung mit Signalgebern in der Anzahl der Schaltstraßen und in den Schaltrichtungen mit mindestens je einem der Schaltwillen anzeigenden Signalgeber und je einem das Schalten auslösenden Signalgeber versehen ist, wobei von den Schaltwillen anzeigenden Signalgebern die derjenigen Bewegung des Dreistellungs-Arbeitszylinders, bei welcher dieser die kleinere Kraft ausübt, zugeordneten elektropneumatischen Ventile, und von den das Schalten auslösenden Signalgebern die derjenigen Bewegung des Dreistellungs-Arbeitszylinders, bei welcher dieser die größere Kraft ausübt, zugeordneten elektropneumatischen Ventile gesteuert werden, daß wenigstens der Dreistellungs-Arbeitszylinder in dessen Endstellungen ansprechende Signalgeber aufweist, und daß eine den Fernschaltarm bremsende bzw. haltende, elektromagnetisch betätigte Vorrichtung vorgesehen ist, die von den den Schaltwillen anzeigenden Signalgebern einschaltbar ist, von den das Schalten auslösenden Signalgebern ausschaltbar ist und von den den Endstellungen des Dreistellungs-Arbeitszylinders zugeordneten Signalgebern wieder einschaltbar ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-3 298 483  (W. McKENZIE et al.) * Spalte 5, Zeile 37 - Spalte 6, Zeile 46; Figuren 1,6,8,13 * | 1 | F 16 H   5/28 |
| Y | FR-A-2 154 001  (R. BOSCH) * Seite 1, Zeilen 24-26; Seite 2, Zeilen 2-7 * | 1 | |
| A | WO-A-8 500 860  (RAUE) * Zusammenfassung * | 1 | |
| A | DE-A-3 128 266  (ZF-FRIEDRICHSHAFEN) * Zusammenfassung * | 1 | |

RECHERCHIERTE
SACHGEBIETE (Int. Cl.4)

F 16 H

Der vorliegende Recherchenbericht wurde für alle Patentansprüche erstellt

| Recherchenort | Abschlußdatum der Recherche | Prüfer |
|---|---|---|
| DEN HAAG | 22-08-1988 | BEERNAERT J.E. |

EPO FORM 1503 03.82 (P0403)